# EUROPEAN PATENT SPECIFICATION

(11) **EP 2 765 589 B1**
(45) Date of publication and mention of the grant of the patent: **04.03.2015**
(21) Application number: 13154345.6
(22) Date of filing: 07.02.2013
(51) Int. Cl.: H01H 71/02, H01H 71/08, H01H 85/20

(54) **A smart fuse**
Intelligente Sicherung
Fusible intelligent

(43) Date of publication of application: 13.08.2014
(73) Proprietor: Thielman, David, 9100 Sint-Niklaas (BE); De Haes, Bert Hendrik F., 2540 Hove (BE)
(72) Inventor: Thielman, David, 9100 Sint-Niklaas (BE); De Haes, Bert Hendrik F, 2540 Hove (BE); Vanstraelen, David Johan Julien, 9255 Buggenhout (BE)
(74) Representative: Plas, Axel Ivo Michel

(56) References cited:
- EP-A1- 1 473 750
- DE-U1- 29 800 372

## Description

### Field of the Invention

The present invention generally relates to building automation, i.e. functionality introduced in buildings to monitor and control electrical devices such as lighting, heating, ventilation and air conditioning systems (HVACs), sunscreens, electric household appliances, audio equipment, televisions and computers, displays etc. The invention in particular concerns a smart fuse enabling introduction of building automation in renovation projects.

### Background of the Invention

When renovating buildings it is often desired to introduce intelligence enabling to monitor and control electrical devices, e.g. in order to reduce energy and maintenance costs, while reusing the existing cabling available in the building that will be renovated and avoiding that additional electricity cabinets must be installed and/or additional wiring must be installed towards such new electricity cabinets or inside an existing electricity cabinet. These existing electricity cabinets typically comprise so called Deutsches Institut für Normung (DIN) rails whereon standardized circuit breakers or fuses that are each 3,50 cm or 2 TE wide are plugged. The DIN rail is a metal rail that enables to mount the circuit breakers between the 230 Volts incoming phase and respective outgoing circuits to one or more electrical devices. These circuit breakers typically connect to the 230 Volts incoming phase via two ingoing terminals spaced apart 1,75 cm or 1 TE, and they connect to the outgoing circuit cabling via two outgoing terminals also spaced apart 1,75 cm or 1 TE. The distance between ingoing terminals and the distance between outgoing terminals however may vary between circuit breakers from different manufacturers. In order to simplify connecting the ingoing terminals of plural circuit breakers mounted on a single DIN rail to the 230 Volts incoming phase, the electricity cabinet may further comprise so called bus bars with electrically conductive pins at standardized distances whereto the ingoing terminals of circuit breakers that respect these standardized distances are connected.

In the digitalSTROM Catalogue 2011 entitled "The New Electricity Can Do More", Aizo describes on pages 12-13 a solution to introduce electricity consumption metering and controlling electrical devices in a single circuit. Thereto a 1,75 cm or 1 TE wide digitalSTROM meter (dSM) is plugged into the electricity cabinet and series connected there with a circuit breaker. The dSM module measures electricity consumption in the single circuit and enables communication with a digitalSTROM chip that must be installed near the electrical device that is power fed by the circuit and controlled, e.g. a rolling shutter, doorbell, washing machine, air conditioning system, light bulb, etc.

The dSM module and the digitalSTROM chip installed near the electrical device(s) transceive data over the power supply cables by altering the instantaneous value of the A/C power supplied to the electrical device(s). The method to transmit data on the power supply lines to the electrical device(s) by modulating the effective power level is for instance described in United States Patent Application US 2009/0027175 from Aizo AG, entitled "Data Transmission Method and Device for A/C Systems".

In order to avoid having to install an additional electricity cabinet and wiring to such additional electricity cabinet, the digitalSTROM solution from Aizo in case of a renovation project requires replacing all 2 TE wide circuit breakers with 1 TE wide circuit breakers that are only available from a limited number of manufacturers. Furthermore, since 1 TE wide circuit breakers connect differently to the incoming 230 Volts phase, the digitalSTROM solution requires replacing the existing bus bars that connect to 2 TE wide circuit breakers with new bus bars that connect to 1 TE wide circuit breakers. In existing electricity cabinets with 1 TE wide circuit breakers, the 1 TE wide dSM module will have to occupy an open space. Typically, an additional DIN rail will be mounted in the electricity cabinet and the 1 TE wide dSM modules will be installed underneath or above the 1 TE wide circuit breakers where they have to be series connected to. A consequence of such configuration however is that the cabling to outgoing circuits may have to be extended and/or may have to be reconfigured. The latter is error prone since the cabling to outgoing circuits will be disconnected from the respective circuit breakers, the cabling will be extended manually by the installer, and the cabling will be connected to the outgoing terminals of the dSM modules, typically mounted on a separate DIN rail. Since the cabling to outgoing circuits is often not labelled, cables may be connected to the wrong dSM module requiring the installer to reconnect the cables in a trial and error fashion. As a consequence, the digitalSTROM solution complicates and increases the costs for building renovation as a result of which this solution does not penetrate the market extensively.

United States Patent Application US 2010/0023286 entitled "Intelligent Fuse Holder and Circuit Protection Methods" describes an intelligent fuse, i.e. a fuse integrating a circuit breaker and a diagnostic function parallel with the fuse. The diagnostic function enables to provide feedback on the cause of a failure. Fig. 3 of US 2010/0023286 shows integration of the circuit breaker and diagnostic function in a single housing that is DIN rail compatible.

Although the intelligent fuse known from US 2010/0023286 enables to introduce some intelligence in existing electrical installations with maximum reuse of equipment such as cabinets, DIN rails and cabling, the intelligence introduced remains limited to diagnosing an eventual cause of a failure of a circuit. The intelligent fuse known from US 2010/0023286 does not monitor or measure the electricity consumption in a power line and it does not enable controlling an electrical device that is powered via the power line. As a consequence, it cannot be used to introduce building automation in existing installations, e.g. during a renovation project.

European Patent Application EP 2 282 411 entitled "Vorrichtung zur Übermittlung von Informationen über eine Stromleitung in einem Wechselspannungsstromnetz", discloses a standard DIN rail compatible housing wherein a circuit breaker, digital power meter and a PLC modem are integrated. This way, an existing circuit breaker in a 2 TE wide DIN compatible housing can be replaced with an intelligent fuse to introduce building automation in existing installations, e.g. as part of a renovation project, with reuse of the electrical cabinet, DIN rails and existing power line cables.

Although the prior art solution described in EP 2 282 411 is suitable for cost-efficient renovation projects wherein building automation is introduced with maximum reuse of existing infrastructure, installation of modules wherein the circuit breaker, electricity consumption meter and digital transceiver are integrated into a single 2 TE wide housing is not efficient. In case one of the components fails, i.e. either the circuit breaker, the power meter or the transceiver becomes damaged, the entire module must be replaced.

The solution known from EP 2 282 411 has as further disadvantage that plural types of such device must be manufactured, i.e. one type for each current limit that is secured by the circuit breaker that is integrated in the single housing, e.g. 8 Ampère, 16 Ampère, 24 Ampère, ... and this for each intelligent function that is integrated with such circuit breaker. The complicates the manufacturing and distribution, and requires retail shops to keep more variants of the device in stock.

Yet another drawback of the device known from EP 2 282 411 is that such device wherein circuit breaker and intelligent function are integrated into a single housing does not separate the responsibilities for introducing building automation from the responsibilities for securing the electrical devices against overcurrent.

It is an objective of the present invention to disclose a smart fuse that resolves the above mentioned shortcomings of existing solutions. More particularly, it is an objective of the present invention to disclose a smart fuse that enables to introduce building automation in existing installations, e.g. during renovation, without requiring installation of additional electricity cabinets and/or cabling. It is a further objective of the present invention to disclose such a smart fuse that can be manufactured, installed, maintained and components of which can be replaced in a user-friendly and cost-efficient manner. It is a further objective of the present invention to disclose such a smart fuse that enables to separate responsibilities for introducing building automation from responsibilities for protecting electrical devices against overcurrent. Document EP1473750 discloses a device according to the preamble of claim 1.

### Summary of the Invention

According to the present invention, the above identified objectives are realized by a smart fuse as defined by claim 1, the smart fuse being adapted to be plugged on a DIN rail in an electricity cabinet with a 230 Volts incoming phase and existing cabling for one or more outgoing circuit towards one or more electrical device, the smart fuse being designed to occupy in the electricity cabinet an entire width substantially equal to 3,50 cm or 2 TE, and the smart fuse comprising:
- two ingoing terminals for connectivity to the 230 Volts incoming phase;
- two outgoing terminals for connectivity to cabling for an outgoing circuit wherein the distance between the two outgoing terminals is between 0,5 TE and 1,5 TE allowing existing cabling to be reused;
- a circuit breaking element being housed in a first housing; and
- one or more intelligent function series connected with the circuit breaker between the ingoing terminals and the outgoing terminals, the one or more intelligent function being housed in a second substantially L-shaped housing.

Thus, the invention consists in series connecting a circuit breaker and at least one intelligent function, e.g. an electricity consumption meter or a power line communications transceiver, into a smart fuse that is size compatible and terminal compatible with existing 2 TE wide fuses. The circuit breaker is housed in a first housing and the at least one intelligent housing is housed in a second L-shaped housing. The second L-shaped housing is compatible with the first housing such that both housings jointly occupy a 2 TE wide space in an electricity cabinet. In renovation projects, existing electricity cabinets and electrical cabling can be reused. For those circuits that need to be monitored or controlled, the existing 2 TE fuse just has to be replaced with a smart fuse according to the invention. No additional space is needed and consequently no additional electricity cabinet has to be installed. Moreover, the smart fuse for an outgoing circuit occupies the same location in the electricity cabinet as the circuit breaker that was securing that outgoing circuit before the renovation. As a consequence, no cabling needs to be extended and interconnecting the existing cabling with the newly installed smart fuse becomes dummy-proof since the old circuit breakers can be replaced one by one with smart fuses according to the invention. Installation of the smart fuse and series connecting the circuit breaker and intelligent function(s) is very efficient and dummy-proof thanks to the two complementary housings. Preferably, the series connectivity is realized automatically by mounting the two complementary housings on the DIN rail. The electrical connections realizing the series connection thereto preferably are foreseen at the top surface of the horizontal portion of the L-shaped housing.

According to an optional aspect of the smart fuse according to the invention, defined by claim 2, the circuit breaker is housed in a first substantially L-shaped housing.

This way, standard bus bars available in the electricity rack will not have to be replaced, since the L-shaped first housing of the circuit breaker enables to realize terminal compatibility with the terminals of such bus bar.

Further optionally, as defined by claim 3, the distance between the two ingoing terminals for connectivity to the 230 Volts incoming phase is substantially equal to 1,75 cm or 1 TE.

Indeed, standard bus bars commonly used in the past and therefor omnipresent in renovation projects have terminals for connectivity to the 230 Volts incoming phase that are spaced apart 1 TE, subject to tolerances.

In an alternative embodiment of the smart fuse according the present invention, defined by claim 4, the circuit breaker is housed in a first 1 TE wide substantially bar-shaped housing.

This way, a variant of the invention is provided wherein the existing 1 TE wide fuse available from a limited number of manufacturers is used. This variant has as drawback that standard bus bars must be replaced with bus bars that provide connectivity to the 230 V incoming phase through terminals that are spaced apart only 0,5 TE.

Further optionally, as defined by claim 5, the first 1 TE wide substantially bar-shaped housing has a height substantially equal to the length of the leg of the second substantially L-shaped housing minus its base.

In such implementation, the second L-shaped housing can be provided with protrusions that cover the conductive pins that are foreseen on certain bus bars destined for use in electricity cabinets that are filled with 1 TE wide fuses. Such bus bars have pairs of conductive pins that are spaced apart 1 TE from each other. When used in conjunction with the smart fuse according to the present invention, only half of the pin pairs are used. The remaining pin pairs either have to be removed, e.g. by sawing, or they preferably are safely housed, e.g. in protrusions of the second L-shaped housing. The latter is possible when the leg of the second L-shaped housing minus its base, has a height equal to the height of the first bar-shaped housing.

According to yet another optional aspect, defined by claim 6, the distance between the two ingoing terminals for connectivity to the 230 Volts incoming phase is substantially equal to 0,85 cm or 0,5 TE.

Indeed, standard bus bars presently used in electricity cabinets wherein 1 TE wide circuit breakers are used, have terminals for connectivity to the 230 Volts incoming phase that are spaced apart 0,5 TE, subject to tolerances.

As further defined by claim 7, the one or more intelligent function in the smart fuse according to the invention may comprise an energy consumption meter.

Alternatively or supplementary, as defined by claim 8, the one or more intelligent function in the smart fuse according to the invention may comprise a Digitalstrom transceiver for transmitting and/or receiving signals sent in accordance with the Digitalstrom standard over the outgoing circuit to and/or from one or more electrical device.

Optionally, as defined by claim 9, the smart fuse according to the invention may further comprise a data bus interface for interconnecting the Digitalstrom transceiver with Digitalstrom transceivers of other smart fuses installed in the electricity cabinet.

Indeed, in order to enable signaling received on one outgoing circuit, e.g. signaling indicating that a switch position has changed, to be shared with intelligent functions on other outgoing circuits, e.g. intelligent functions controlling a lighting device, automated door, sunscreen, etc., the different smart fuses in a single electricity cabinet may be interconnected via a data bus. Each smart fuse thereto needs to be equipped with a data bus interface.

### Brief Description of the Drawings

Fig. 1 illustrates a first embodiment of the smart fuse according to the present invention;
Fig. 2 illustrates a second embodiment of the smart fuse according to the present invention; and
Fig. 3 illustrates a third embodiment of the smart fuse according to the present invention.

### Detailed Description of Embodiment(s)

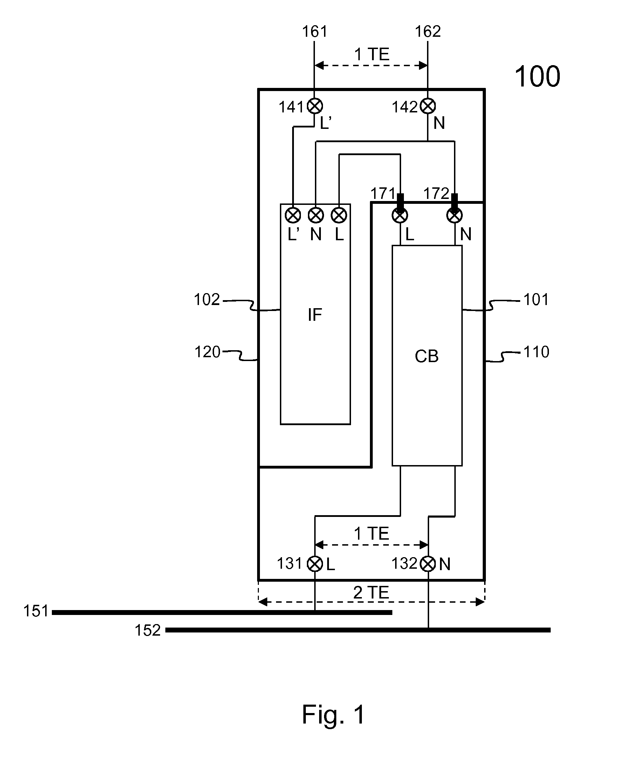

Fig. 1 shows a smart fuse 100 comprising a first L-shaped housing 110 and a second L-shaped housing 120. The first L-shaped housing 110 is horizontally flipped. The second L-shaped housing 120 is vertically flipped. The first L-shaped housing 110 and the second L-shaped housing 120 are further designed to have complementary shapes that jointly form a 2 TE or 3,50 cm wide smart fuse 100 that fits into a slot of existing, standardized electricity cabinets. Thus, the leg of the first L-shaped housing 110 and the leg of the second L-shaped housing 120 have equal lengths and the sum of their respective widths equals 2 TE or 3,50 cm. The base of the first L-shaped housing 110 and the base of the second L-shaped housing 120 have widths equal to 2 TE or 3,50 cm. The heights of the base of the first L-shaped housing 110, the base of the second L-shaped housing 120 and the length of the legs of these L-shaped housings 110 and 120 are dimensioned to jointly stay below the height of a single slot in existing, standardized electricity cabinets.

The first L-shaped housing 110 comprises an ingoing phase terminal, 131 or L, and an ingoing neutral terminal, 132 or N, for connectivity to the incoming 230 V phase cabling, 151 and 152. The ingoing terminals 131 and 132 are spaced apart 1 TE or 1,75 cm enabling connectivity to a standard DIN rail in an existing electricity cabinet. The first L-shaped housing 110 further comprises an outgoing phase terminal L and an outgoing neutral terminal N, and a circuit breaker, 101 or CB, between the ingoing terminals 131, 132 and outgoing terminals L, N.

The second L-shaped housing 120 comprises an outgoing phase terminal, 141 or L', and an outgoing neutral terminal, 142 or N for connectivity to outgoing circuit cabling , 161 and 162. The outgoing circuit cabling 161 and 162 provides electrical power to one or more electrical device in the building that are series or parallel connected. The outgoing terminals 141 and 142 are spaced apart 1 TE or 1,75 cm enabling connectivity to existing cabling 162, 162 in an existing electricity cabinet. The second L-shaped housing 120 further comprises an intelligent function, 102 or IF, with an ingoing phase terminal L, a neutral terminal N, and an outgoing phase terminal L'. The intelligent function 120 enables monitoring and/or controlling the electrical device(s) that are connected to the outgoing circuit 161, 162. The monitoring may for instance entail metering the electrical energy consumption of the electrical device(s). The controlling may for instance entail switching on/off or dimming the electrical device(s) through communicating instructions over the power line wiring 161, 162 to a transceiver installed in or near the electrical device(s). The intelligent function 102 is series connected with the circuit breaker 101 as follows: the outgoing phase terminal L of the circuit breaker 101 is connected with the incoming phase terminal L of the intelligent function 102 through a first connector 171 in between the first L-shaped housing 110 and the second L-shaped housing 120; similarly, the outgoing neutral terminal N of the circuit breaker 101 is connected with the neutral terminal N of the intelligent function 102 through a second connector 172 in between the first L-shaped housing 110 and the second L-shaped housing 120; the neutral terminal N of the intelligent function 102 is further also connected to the outgoing neutral terminal 142 in the second L-shaped housing 120, and the outgoing phase terminal L' of the intelligent function 102 is connected to the outgoing phase terminal 141 in the second L-shaped housing 120. The connectors 171 and 172 between the two L-shaped housings 101 and 102 guarantee dummy-proof installation of the smart fuse 100 in an existing electricity cabinet with reuse of DIN rails and circuit cabling, and they guarantee proper series-connection of the circuit-breaker 101 and intelligent function 102 that introduces building automation on the circuit 161, 162.

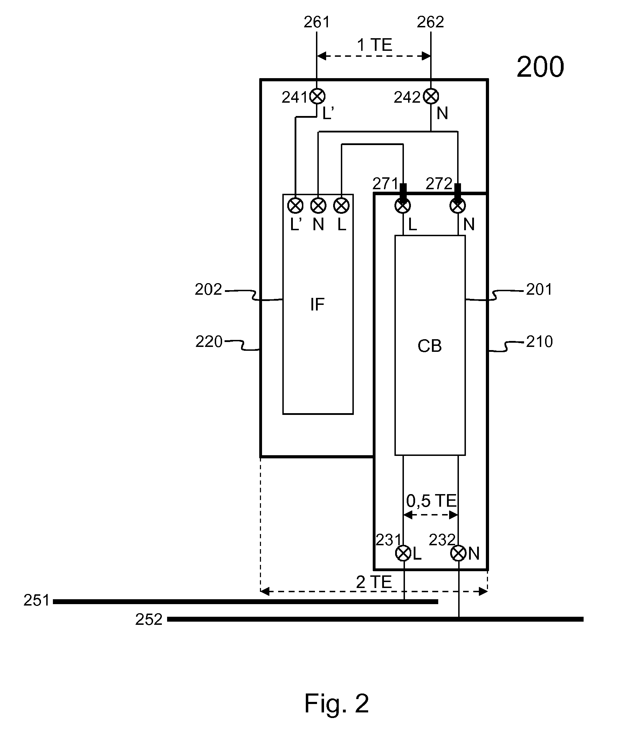

Fig. 2 shows a smart fuse 200 comprising a first bar-shaped housing 210 and a second L-shaped housing 220. The second L-shaped housing 220 is vertically flipped. The first bar-shaped housing 210 and the second L-shaped housing 220 are further designed to have complementary shapes that jointly form a 2 TE or 3,50 cm wide smart fuse 200 that fits into a slot of existing, standardized electricity cabinets. The first bar-shaped housing 210 and the leg of the second L-shaped housing 220 do not have equal lengths, but the sum of their respective widths equals 2 TE or 3,50 cm. The base of the second L-shaped housing 220 has a width equal to 2 TE or 3,50 cm. The height of the first bar-shaped housing 210, and the height of the base of the second L-shaped housing 220 are dimensioned to jointly stay below the height of a single slot in existing, standardized electricity cabinets.

The first bar-shaped housing 210 comprises an ingoing phase terminal, 231 or L, and an ingoing neutral terminal, 232 or N, for connectivity to the incoming 230 V phase cabling, 251 and 252. The ingoing terminals 231 and 232 are spaced apart 0,5 TE, hence requiring a dedicated new bus bar to be installed if standard DIN bars are available in an existing installation. The first bar-shaped housing 210 further comprises an outgoing phase terminal L and an outgoing neutral terminal N, and a circuit breaker, 201 or CB, between the ingoing terminals 231, 232 and outgoing terminals L, N.

The second L-shaped housing 220 comprises an outgoing phase terminal, 241 or L', and an outgoing neutral terminal, 242 or N for connectivity to outgoing circuit cabling , 261 and 262. The outgoing circuit cabling 261 and 262 provides electrical power to one or more electrical device in the building that are series or parallel connected. The outgoing terminals 241 and 242 are spaced apart 1 TE or 1,75 cm enabling connectivity to existing cabling 261, 262 in an existing electricity cabinet. The second L-shaped housing 220 further comprises an intelligent function, 202 or IF, with an ingoing phase terminal L, a neutral terminal N, and an outgoing phase terminal L'. The intelligent function 202 enables monitoring and/or controlling the electrical device(s) that are connected to the outgoing circuit 261, 262. The monitoring may for instance entail metering the electrical energy consumption of the electrical device(s). The controlling may for instance entail switching on/off or dimming the electrical device(s) through communicating instructions over the power line wiring 261, 262 to a transceiver installed in or near the electrical device(s). The intelligent function 202 is series connected with the circuit breaker 201 as follows: the outgoing phase terminal L of the circuit breaker 201 is connected with the incoming phase terminal L of the intelligent function 202 through a first connector 271 in between the first L-shaped housing 210 and the second L-shaped housing 220; similarly, the outgoing neutral terminal N of the circuit breaker 201 is connected with the neutral terminal N of the intelligent function 202 through a second connector 272 in between the first L-shaped housing 210 and the second L-shaped housing 220; the neutral terminal N of the intelligent function 202 is further also connected to the outgoing neutral terminal 242 in the second L-shaped housing 220, and the outgoing phase terminal L' of the intelligent function 202 is connected to the outgoing phase terminal 241 in the second L-shaped housing 220. The connectors 271 and 272 between the two housings 201 and 202 guarantee dummy-proof installation of the smart fuse 200 in an existing electricity cabinet with reuse of circuit cabling, and they guarantee proper series-connection of the circuit-breaker 201 and intelligent function 202 that introduces building automation on the circuit 261, 262.

Preferably, the L-shaped housings 120 and 220 in the first embodiment illustrated by Fig. 1 and the second embodiment illustrated by Fig. 2 are made identical. As a result, the same housing integrating intelligent function(s) can be used in renovation projects where it is desired to re-use existing DIN rails and renovation or construction projects wherein the 1 TE wide existing fuses available from a limited number of manufacturers, are used in order to introduce building automation.

It is further noticed that an additional advantage of the present invention lies in the fact that it is not necessary to replace both housings, i.e. the housing comprising the intelligent function(s) and the housing comprising the circuit breaker, in case of failure/damage of one of the components. As a result, not only the installation is efficient, but also maintenance becomes cost-efficient thanks to the present invention.

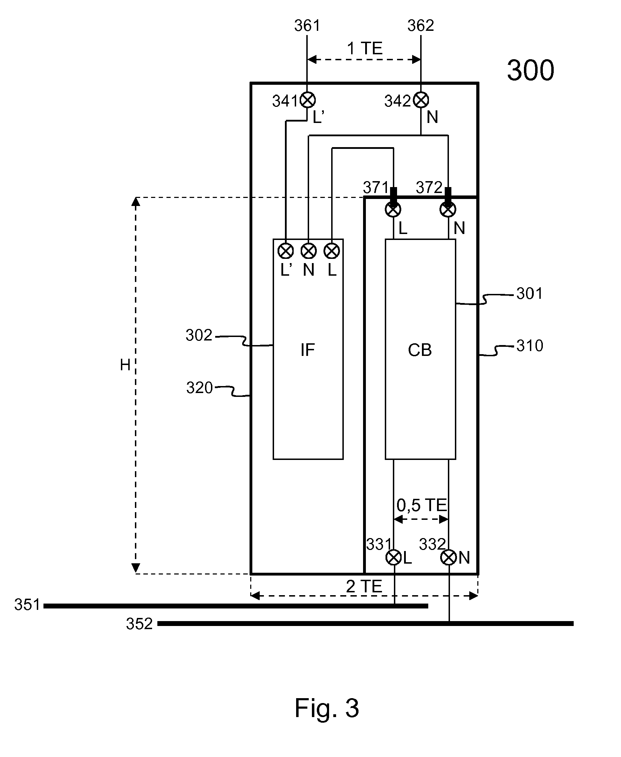

Fig. 3 shows a smart fuse 300 comprising a first bar-shaped housing 310 and a second L-shaped housing 320. The second L-shaped housing 320 is vertically flipped. The first bar-shaped housing 310 and the second L-shaped housing 320 are further designed to have complementary shapes that jointly form a 2 TE or 3,50 cm wide smart fuse 300 that fits into existing, standardized electricity cabinets. The first bar-shaped housing 310 and the leg of the second L-shaped housing 320 have equal lengths H, and the sum of their respective widths equals 2 TE or 3,50 cm. The base of the second L-shaped housing 320 has a width equal to 2 TE or 3,50 cm. The height of the first bar-shaped housing 310, and the height of the base of the second L-shaped housing 320 are dimensioned to jointly stay below the height of a single slot in existing, standardized electricity cabinets.

The first bar-shaped housing 310 comprises an ingoing phase terminal, 331 or L, and an ingoing neutral terminal, 332 or N, for connectivity to the incoming 230 V phase cabling, 351 and 352. The ingoing terminals 331 and 332 are spaced apart 0,5 TE, hence requiring a dedicated new bus bar to be installed if standard DIN bars are available in an existing installation. The first bar-shaped housing 310 further comprises an outgoing phase terminal L and an outgoing neutral terminal N, and a circuit breaker, 301 or CB, between the ingoing terminals 331, 332 and outgoing terminals L, N.

The second L-shaped housing 320 comprises an outgoing phase terminal, 341 or L', and an outgoing neutral terminal, 342 or N for connectivity to outgoing circuit cabling , 361 and 362. The outgoing circuit cabling 361 and 362 provides electrical power to one or more electrical device in the building that are series or parallel connected. The outgoing terminals 341 and 342 are spaced apart 1 TE or 1,75 cm enabling connectivity to existing cabling 361, 362 in an existing electricity cabinet. The second L-shaped housing 320 further comprises an intelligent function, 302 or IF, with an ingoing phase terminal L, a neutral terminal N, and an outgoing phase terminal L'. The intelligent function 302 enables monitoring and/or controlling the electrical device(s) that are connected to the outgoing circuit 361, 362. The monitoring may for instance entail metering the electrical energy consumption of the electrical device(s). The controlling may for instance entail switching on/off or dimming the electrical device(s) through communicating instructions over the power line wiring 361, 362 to a transceiver installed in or near the electrical device(s). The intelligent function 302 is series connected with the circuit breaker 301 as follows: the outgoing phase terminal L of the circuit breaker 301 is connected with the incoming phase terminal L of the intelligent function 302 through a first connector 371 in between the first L-shaped housing 310 and the second L-shaped housing 320; similarly, the outgoing neutral terminal N of the circuit breaker 301 is connected with the neutral terminal N of the intelligent function 302 through a second connector 372 in between the first L-shaped housing 310 and the second L-shaped housing 320; the neutral terminal N of the intelligent function 302 is further also connected to the outgoing neutral terminal 342 in the second L-shaped housing 320, and the outgoing phase terminal L' of the intelligent function 302 is connected to the outgoing phase terminal 341 in the second L-shaped housing 320. The connectors 371 and 372 between the two housings 301 and 302 guarantee dummy-proof installation of the smart fuse 300 in an existing electricity cabinet with reuse of circuit cabling, and they guarantee proper series-connection of the circuit-breaker 301 and intelligent function 302 that introduces building automation on the circuit 361, 362.

In comparison with the second embodiment, the third embodiment has the advantage that the housing for the intelligent function is bigger. As such, the intelligent function(s) housed therein can be made less compact, using less expensive components. A further advantage of the third embodiment is that the L-shaped housing 320 can be provided with protrusions enabling to hide the non-used pair of pins in case a bus bar is used for connectivity to the 230 Volts phase 351, 352 whereon the pin pairs are spaced apart 1 TE.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A smart fuse (100; 200; 300) adapted to be plugged on a DIN rail in an electricity cabinet with a 230 Volts incoming phase (151, 152; 251, 252; 351, 352) and existing cabling for one or more outgoing circuit (161, 162; 261, 262; 361, 362) towards one or more electrical device, said smart fuse (100; 200; 300) being designed to occupy in said electricity cabinet an entire width equal to 3,50 cm or 2 TE, and said smart fuse (100; 200; 300) comprising:
- two ingoing terminals (131, 132; 231, 232; 331, 332) for connectivity to said 230 Volts incoming phase (151, 152; 251, 252; 351, 352);
- two outgoing terminals (141, 142; 241, 242; 341, 342) for connectivity to cabling for an outgoing circuit (161, 162; 261, 262; 361, 362) wherein the distance between said two outgoing terminals (141, 142; 241, 242; 341, 342) is between 0,5 TE and 1,5 TE allowing said existing cabling to be reused;
- a circuit breaking element (101; 201; 301) housed in a first housing (110; 210; 310); **characterised by**
- one or more intelligent function (102; 202; 302) series connected with said circuit breaker (101; 201; 301) between said ingoing terminals (131, 132; 231, 232; 331, 332) and said outgoing terminals (141, 142; 241, 242; 341, 342), said one or more intelligent function (102; 202; 302) being housed in a second shaped housing (120; 220; 320).

2. A smart fuse (100) according to claim 1, wherein said circuit breaker (101) is housed in a first L-shaped housing (110).

3. A smart fuse (100) according to claim 2, wherein the distance between said two ingoing terminals (131, 132) for connectivity to said 230 Volts incoming phase (151, 152) is substantially equal to 1,75 cm or 1 TE.

4. A smart fuse (200; 300) according to claim 1, wherein said circuit breaker (201; 301) is housed in a first 1 TE wide bar-shaped housing (210; 310).

5. A smart fuse (300) according to claim 4, wherein said first 1 TE wide substantially bar-shaped housing (310) has a height (H) substantially equal to the length of the leg of said second L-shaped housing (320) minus its base.

6. A smart fuse (200; 300) according to claim 4 or claim 5, wherein the distance between said two ingoing terminals (231, 232; 331, 332) for connectivity to said 230 Volts incoming phase (251, 252; 351, 352) is substantially equal to 0,85 cm or 0,5 TE.

7. A smart fuse (100; 200; 300) according to any of the foregoing claims, wherein said one or more intelligent function (102; 202; 302) comprise an energy consumption meter.

8. A smart fuse (100; 200; 300) according to any of the foregoing claims, wherein said one or more intelligent function (102; 202; 302) comprise a Digitalstrom transceiver for transmitting and/or receiving signals sent in accordance with the Digitalstrom standard over said outgoing circuit (161, 162; 261, 262; 361, 362) to and/or from one or more electrical device.

9. A smart fuse (100; 200; 300) according to claim 8, further comprising a data bus interface for interconnecting said Digitalstrom transceiver with Digitalstrom transceivers of other smart fuses installed in said electricity cabinet.

## Patentansprüche

1. Intelligente Sicherung (100; 200; 300), die so ausgelegt ist, dass sie in eine DIN-Schiene in einem Stromschrank mit einer eingehenden 230-Volt-Phase (151, 152; 251, 252; 351, 352) und einer bestehenden Verkabelung für eine oder mehrere in Richtung einer oder mehrerer elektrischer Vorrichtungen abgehende Leitungen (161, 162; 261, 262; 361, 362) eingesteckt wird, wobei die intelligente Sicherung (100; 200; 300) so ausgeführt ist, dass sie in dem Stromschrank eine Gesamtbreite von gleich 3,50 cm oder 2 TE einnimmt, und die intelligente Sicherung (100; 200; 300) umfasst:
- zwei eingehende Anschlüsse (131, 132; 231, 232; 331, 332) für eine Konnektivität mit der eingehenden 230-Volt-Phase (151, 152; 251, 252; 351, 352);
- zwei ausgehende Anschlüsse (141, 142; 241, 242; 341, 342) für eine Konnektivität mit der Verkabelung für eine ausgehende Leitung (161, 162; 261, 262; 361, 362), wobei der Abstand zwischen den zwei ausgehenden Anschlüssen (141, 142; 241, 242; 341, 342) zwischen 0,5 TE und 1,5 TE liegt, wodurch ermöglicht wird, dass die Verkabelung wiederverwendet wird;
- einen Schutzschalter (101; 201; 301), das in einem ersten Gehäuse (110; 210; 310) aufgenommen ist;
**gekennzeichnet durch**
- eine oder mehrere intelligente Funktionen (102; 202; 302), die mit dem Schutzschalter (101; 201; 301) zwischen den eingehenden Anschlüssen (131, 132; 231, 232; 331, 332) und den ausgehenden Anschlüssen (141, 142; 241, 242; 341, 342) in Reihe geschaltet sind, wobei die eine oder die mehreren intelligenten Funktionen (102; 202; 302) in einem zweiten L-förmigen Gehäuse (120; 220; 320) aufgenommen sind.

2. Intelligente Sicherung (100) nach Anspruch 1, wobei der Schutzschalter (101) in einem ersten L-förmigen Gehäuse (110) aufgenommen ist.

3. Intelligente Sicherung (100) nach Anspruch 2, wobei der Abstand zwischen den zwei eingehenden Anschlüssen (131, 132) für eine Konnektivität mit der ankommenden 230-Volt-Phase (151, 152) im Wesentlichen gleich 1,75 cm oder 1 TE ist.

4. Intelligente Sicherung (200; 300) nach Anspruch 1, wobei der Schutzschalter (201; 301) in einem ersten 1 TE breiten stabförmigen Gehäuse (210; 310) aufgenommen ist.

5. Intelligente Sicherung (300) nach Anspruch 4, wobei das erste 1 TE breite stabförmige Gehäuse (310) eine Höhe (H) von im Wesentlichen gleich der Länge des Schenkels des zweiten L-förmigen Gehäuses (320) minus seines Basisteils aufweist.

6. Intelligente Sicherung (200; 300) nach Anspruch 4 oder Anspruch 5, wobei der Abstand zwischen den zwei eingehenden Anschlüssen (231, 232; 331, 332) für eine Konnektivität mit der eingehenden 230-Volt-Phase (251, 252; 351, 352) im Wesentlichen gleich 0,85 cm oder 0,5 TE ist.

7. Intelligente Sicherung (100; 200; 300) nach einem der vorhergehenden Ansprüche, wobei die eine oder die mehreren intelligenten Funktionen (102; 202; 302) einen Energieverbrauchsmesser aufweisen.

8. Intelligente Sicherung (100; 200; 300) nach einem der vorhergehenden Ansprüche, wobei die eine oder die mehreren intelligenten Funktionen (102; 202; 302) einen Digitalstrom-Sendeempfänger zum Senden und/oder Empfangen von Signalen aufweist, die entsprechend dem Digitalstrom-Standard über die ausgehende Leitung (161, 162; 261, 262; 361, 362) zu und/oder von einer oder mehreren elektrischen Vorrichtungen gesendet werden.

9. Intelligente Sicherung (100; 200; 300) nach Anspruch 8, die ferner eine Datenbus-Schnittstelle zum Verbinden des Digitalstrom-Sendeempfängers mit Digitalstrom-Sendeempfängern von anderen intelligenten Sicherungen, die in dem Stromschrank eingebaut sind, umfasst.

## Revendications

1. Fusible intelligent (100 ; 200 ; 300) adapté à être enfiché sur un rail DIN dans une armoire électrique avec une phase d'arrivée de 230 volts (151, 152 ; 251, 252 ; 351, 352) et un câblage existant pour un ou plusieurs circuits de sortie (161, 162 ; 261, 262 ; 361, 362) en direction d'un ou de plusieurs dispositifs électriques, ledit fusible intelligent (100 ; 200 ; 300) étant conçu pour occuper, dans ladite armoire électrique, toute une largueur égale à 3,50 cm ou 2 TE, et ledit fusible intelligent (100 ; 200 ; 300) comprenant :
- deux bornes d'entrée (131, 132 ; 231, 232 ; 331, 332) permettant le raccordement à ladite phase d'arrivée de 230 volts (151, 152 ; 251, 252 ; 351, 352) ;
- deux bornes de sortie (141, 142 ; 241, 242 ; 341, 342) permettant le raccordement à un câblage pour un circuit de sortie (161, 162 ; 261, 262 ; 361, 362), la distance séparant lesdites deux bornes de sortie (141, 142 ; 241, 242 ; 341, 342) étant comprise entre 0,5 TE et 1,5 TE pour permettre la réutilisation dudit câble existant ;
- un disjoncteur (101 ; 201 ; 301) logé dans un premier boîtier (110 ; 210 ; 310) ; **caractérisé par**
- une ou plusieurs fonctions intelligentes (102 ; 202 ; 302) montées en série avec ledit disjoncteur (101 ; 201 ; 301) entre lesdites bornes d'entrée (131, 132 ; 231, 232 ; 331, 332) et lesdites bornes de sortie (141, 142 ; 241, 242 ; 341, 342), ladite ou lesdites fonctions intelligentes (102 ; 202 ; 302) étant logées dans un deuxième boîtier en forme de L (120 ; 220 ; 320).

2. Fusible intelligent (100) selon la revendication 1, dans lequel ledit disjoncteur (101) est logé dans un premier boîtier en forme de L (110).

3. Fusible intelligent (100) selon la revendication 2, dans lequel la distance séparant lesdites bornes d'entrée (131, 132) permettant le raccordement à ladite phase d'arrivée de 230 volts (151, 152) est sensiblement égale à 1,75 cm ou 1 TE.

4. Fusible intelligent (200 ; 300) selon la revendication 1, dans lequel ledit disjoncteur (201 ; 301) est logé dans un premier boîtier en forme de barre (210 ; 310) de 1 TE de large.

5. Fusible intelligent (300) selon la revendication 4, dans lequel ledit premier boîtier en forme de barre (310) de 1 TE de large présente une hauteur (H) sensiblement égale à la longueur du bras dudit deuxième boîtier en forme de L (320) moins sa base.

6. Fusible intelligent (200 ; 300) selon la revendication 4 ou la revendication 5, dans lequel la distance séparant lesdites deux bornes d'entrée (231, 232 ; 331, 332) permettant le raccordement à ladite phase d'arrivée de 230 volts (251, 252 ; 351, 352) est sensiblement égale à 0,85 cm ou 0,5 TE.

7. Fusible intelligent (100 ; 200 ; 300) selon l'une quelconque des revendications précédentes, dans lequel ladite ou lesdites fonctions intelligentes (102 ; 202 ; 302) comprennent un compteur de consommation d'énergie.

8. Fusible intelligent (100 ; 200 ; 300) selon l'une quelconque des revendications précédentes, dans lequel ladite ou lesdites fonctions intelligentes (102 ; 202 ; 302) comprennent un émetteur-récepteur Digitalstrom permettant d'émettre et/ou de recevoir des signaux transmis conformément à la norme Digitalstrom sur ledit circuit de sortie (161, 162 ; 261, 262 ; 361, 362) à destination et/ou en provenance d'un ou de plusieurs dispositifs électriques.

9. Fusible intelligent (100 ; 200 ; 300) selon la revendication 8, comprenant en outre une interface de bus de données permettant de raccorder entre eux ledit émetteur-récepteur Digitalstrom et des émetteurs-récepteurs Digitalstrom d'autres fusibles intelligents installés dans ladite armoire électrique.
